# EUROPÄISCHE PATENTSCHRIFT

(11) **EP 3 874 333 B1**
(45) Veröffentlichungstag und Bekanntmachung des Hinweises auf die Patenterteilung: **08.03.2023**
(21) Anmeldenummer: 19704211.2
(22) Anmeldetag: 23.01.2019
(51) Int. Cl.: H04L 12/00

(54) **VERFAHREN ZUR AUSFALLSICHEREN DATENÜBERTRAGUNG, NETZWERK-KNOTEN, COMPUTERPROGRAMM UND COMPUTERLESBARES MEDIUM**
METHOD FOR FAIL-SAFE DATA TRANSMISSION, NETWORK NODES, COMPUTER PROGRAM AND COMPUTER-READABLE MEDIUM
PROCÉDÉ DE TRANSFERT DE DONNÉES À SÉCURITÉ INTÉGRÉE, NOEUD DE RÉSEAU, PROGRAMME INFORMATIQUE ET SUPPORT LISIBLE PAR ORDINATEUR

(43) Veröffentlichungstag der Anmeldung: 08.09.2021
(73) Patentinhaber: Siemens Aktiengesellschaft, 80333 München (DE)
(72) Erfinder: CHEN, Feng, 90537 Feucht (DE); GÖTZ, Franz-Josef, 91180 Heideck (DE); KIESSLING, Marcel, 91235 Velden (DE); NGUYEN, An Ninh, 90427 Nürnberg (DE); SCHMITT, Jürgen, 90766 Fürth (DE)
(74) Vertreter: Siemens Patent Attorneys
(86) Internationale Anmeldenummer: PCT/EP2019/051604
(87) Internationale Veröffentlichungsnummer: WO 2020/151814

(56) Entgegenhaltungen:
- EP-A1- 3 035 606
- WO-A1-2018/015425
- WO-A1-2019/001718
- US-A1- 2012 314 597
- US-A1- 2015 207 671
- US-A1- 2015 215 200

## Beschreibung

Die Erfindung betrifft ein Verfahren zur ausfallsicheren Datenübertragung in einem insbesondere industriellen Netzwerk mit mehreren Netzwerkknoten. Darüber hinaus betrifft die Erfindung einen Netzwerkknoten, ein Computerprogramm und ein computerlesbares Medium.

In Industrienetzwerken erfolgt der Austausch von Sensor/Aktor-Informationen mit der Steuerung in der Regel digitalisiert über ein Kommunikationsnetzwerk. Ein Feldbus ist ein Bussystem, das in einer Anlage Feldgeräte wie Messfühler (Sensoren) und Stellglieder (Aktoren) zwecks Kommunikation mit einem Automatisierungsgerät verbindet. Wenn mehrere Kommunikationsteilnehmer ihre Nachrichten über dieselbe Leitung senden, dann muss festgelegt sein, wer (Kennung) was (Messwert, Befehl) wann (Initiative) sagt. Hierfür gibt es normierte Protokolle. Als Technologie hat sich Ethernet durchgesetzt.

Der Feldbus ersetzt die parallelen Leitungsbündel durch ein einziges Buskabel und verbindet alle Ebenen, von der Feldbis zur Leitebene. Unabhängig von der Art des Automatisierungsgeräts, z.B. speicherprogrammierbare Steuerungen (SPS) unterschiedlicher Hersteller oder PC-basierte Steuerungen, vernetzt das Übertragungsmedium des Feldbusses die Komponenten im Feld.

Die zu übertragenden Daten sind für die Automatisierungsaufgabe notwendig - ein Verlust von Daten soll deswegen ausgeschlossen werden. Die Zerstörung oder der Ausfall von einzelnen Verbindungsstrecken soll ebenfalls nicht zu einem Abbruch der Kommunikation führen.

In der Industrie wurde bisher eine eigene Feldbus-Technologie ausgearbeitet. Die neuen echtzeitfähigen Ethernet-basierten Feldbusse sind beispielsweise in der Norm IEC 61784-2 zusammengestellt. Bekannt ist PROFINET (Process Field Network), der offene Industrial-Ethernet-Standard der PROFIBUS-Nutzerorganisation e.V. (PNO) für die Automatisierung. PROFINET nutzt TCP/IP und IT-Standards, ist Echtzeit-Ethernet-fähig und ermöglicht die Integration von Feldbus-Systemen.

Die reine Datenübertragung im Ethernet bietet keinen Schutz im Falle eines Ausfalls einer Verbindung. Durch IT-Protokolle wie beispielsweise RSTP wird ein Netzwerk schleifenfrei (durch Deaktivierung von vorhandenen zusätzlichen Kabeln, die auch als Links bezeichnet werden). Es existieren Weiterentwicklungen, beispielsweise ISIS SPB (SPB steht dabei für Shortest Path Bridging, welches in IEEE802.1aq standardisiert ist; ISIS steht für das Routing-Protokoll "Intermediate System to Intermediate System Protocol", welches insbesondere ISO/IEC 10589:2002(E) standardisiert ist). Die Weiterentwicklungen basieren dabei auf der Verwendung der jeweils kürzesten Verbindung zwischen Netzwerkknoten, etwa Bridges, und der Deaktivierung von zusätzlichen Links. Bei beiden vorgenannten Varianten kommt es jedoch im Fehlerfall zu einem kurzzeitigen Ausfall der Kommunikation.

Insbesondere im Bereich der Industrie wurden spezielle Redundanzmechanismen eingeführt, um möglichst einfach eine deterministische Umschaltzeit garantieren zu können und den Ausfall gering zu halten. Hierbei ist beispielsweise auf das Media Redundancy Protocol (MRP, siehe insbesondere IEC62439) zurückgegriffen worden, welches Einzelausfälle in einer einfachen Ring-Topologie kompensieren kann.

Bei Anwendungen, die nicht mit dem Ausfall einer Verbindung zurechtkommen, werden die Daten in der Regel auf mehreren, typischerweise zwei getrennten Übertragungswegen (Pfaden) parallel im Netzwerk übertragen. Dies wird oft als "Seamless Redundancy" bezeichnet, da es im Fehlerfall keinen Ausfall der Kommunikation gibt. Bekannt ist beispielsweise das als High-Availability Seamless Redundancy (HSR) bezeichnete Netzwerkprotokoll für Ethernet sowie das Parallel Redundancy Protocol (PRP), die beide in IEC 62439-3 standardisiert sind. Bei HSR und PRP wird eine Sequenznummer in alle Datenpakete eingefügt.

In der IEEE ist dieses Prinzip im Rahmen von IEEE802.1CB durch die TSN-Arbeitsgruppe standardisiert. In einer Verbindung wird ein zusätzliches TAG (Redundancy-TAG) mit einer Sequenznummer eingefügt. Dadurch können für besonders kritische Verbindungen Duplikate im Netzwerk übertragen und später gefiltert werden.

Sämtliche vorbekannten Mechanismen werden nur für den Betrieb verwendet und verhindern einen Kommunikationsausfall bei einem Fehler auf einem der beiden redundanten Pfade. Nicht problemlos möglich ist eine gegebenenfalls geplante, insbesondere permanente Änderung eines bestehenden Netzwerkes, etwa aufgrund eines Umbaus und/oder einer Erweiterung. Bei Umschalt-Redundanz - auch bei Seamless Redundancy - kann es hier zu einem kurzzeitigen Ausfall der Kommunikation kommen. Dieser wird bisher nicht verhindert. Ursache hierfür ist, dass aufgrund einer Netzwerkänderung eine Änderung sämtlicher - im Falle zweier - beider redundanter Pfade auftreten kann. Die redundanten Pfade werden bisher bei ISIS SPB-PCR durch den sogenannten GADAG bestimmt. Das Akronym GADAG steht dabei für Generalized Almost Directed Acyclic Graph, ins Deutsche übersetzt generalisierter, nahezu gerichteten azyklischer Graph. In dem IETF-Entwurf mit dem Titel "Algorythms for Computing Maximally Redundant Trees for IP/LDP Fast-Reroute" beispielsweise ist ein Verfahren für einen MRT-Fast-Reroute-Algorithmus offenbart, der eine Berechnung von GADAG's und eine Ableitung von MRT's von den GADAG's ermöglicht.

Ein GADAG kann als Grundlage für redundante Pfade im Netzwerk dienen. Bei der Pfadberechnung wird üblicher Weise ein Pfad/Weg in Richtung des GADAG und ein zweiter entgegen des GADAG's gefunden. Bei einer Änderung des GADAG kann sich jedoch die Richtung des GADAGs in einem Teilsegment ändern. Von dieser Änderung sind dann beide Pfade/Wege betroffen. Bei einer Umschaltung von einem bisherigen auf einen neuen GADAG kann es somit zu einer gleichzeitigen Änderung auf beiden Pfaden kommen, welche zum Ausfall der Kommunikation selbst bei Anwendung eines Seamless-Redundancy-Verfahrens führt. Eine entsprechende Änderung kann somit schlimmer sein als ein Ausfall, etwa defekt einer einzelnen Verbindung.

Bekannt ist auch das Stream Reservation Protocol (SRP), IEEE802.1Qat, mit dem Übertragungsressourcen dynamisch reserviert werden können und es möglich wird, Latenzzeiten zu garantieren. Die aus der AVB (Audio Video Bridging) Task Group hervorgegangene Time Sensitive Networking (TSN) Task Group hat an einer Reihe weiterer Standards gearbeitet bzw. arbeitet an diesen. Zu den TSN-Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere.

Aus der ebenfalls auf die Anmelderin zurückgehenden WO 2019/001718 A1 geht ein Verfahren zur Reservierung von maximal redundanten Übertragungswegen für die Übertragung von Datenpaketen hervor. Offenbart ist, ein Reservierungsprotokoll so zu erweitern, dass eine automatische Konfiguration der Duplikatefilter von Seamless Redundancy an den benötigten Stellen im Netzwerk während der Ressourcenreservierung vorgenommen wird. Im Reservierungsprotokoll sind dazu bereits alle Informationen bekannt.

Die WO 2018/015425 A1 offenbart ein Verfahren zur Bestimmung von redundanten Kommunikationspfaden in einem industriellen TSN-Netzwerk.

Die US 2015/215200 A1 schlägt vor, im Fall eines Ausfalls eines Netzwerkpfades, vordefinierte "recovery" Pfade zu nutzen, sollte die Reservierung des neuen Pfades nicht innerhalb einer festgelegten Zeit erfolgreich sein.

Ausgehend von dem Stand der Technik besteht eine Aufgabe der vorliegenden Erfindung darin, das Verfahren der eingangs genannten Art derart weiterzuentwickeln, dass eine besonders hohe Ausfallsicherheit der Kommunikation besteht, dies vor allem auch im Falle einer Änderung des Netzwerkes, insbesondere der Netzwerktopologie. Darüber hinaus ist es eine Aufgabe der Erfindung, einen Netzwerkknoten zur Durchführung eines solchen Verfahrens anzugeben.

Die erstgenannte Aufgabe wird gelöst durch ein Verfahren gemäß Patentanspruch 1.

Der Grundgedanke der vorliegenden Erfindung besteht mit anderen Worten darin, eine erhöhte Ausfallsicherheit selbst für den Fall von Änderungen, insbesondere Netzwerk-Topologie-Änderungen zu bieten, indem zusätzlich neue Reservierungen aufgebaut und bestehende Reservierungen gezielt erst abgebaut werden, wenn die neuen Reservierungen erfolgreich waren. Dabei kommen erfindungsgemäß für die neuen Reservierungen neue, andere Kenner für den oder die neuen redundanten Pfade/Wege zum Einsatz. Bei den Kennern kann es sich beispielsweise um VLAN IDs handeln, die auch kurz als VIDs bezeichnet werden.

Da erfindungsgemäß nicht einfach direkt auf neue Pfade gewechselt wird, sondern bestehende Reservierungen auf bestehenden Pfaden zunächst bewusst nicht geändert sondern weiter aufrecht erhalten und zweckmäßiger Weise, soweit möglich, für die Weiterleitung von Paketen bzw. Frames genutzt werden, kann auch in demjenigen Fall, dass sämtliche von zwei oder mehr vorhandenen redundanten Pfade von einem Wechsel betroffen sind, eine unterbrechungsfreie Kommunikation gewährleistet werden. Insbesondere kann dann zumindest einer der bisherigen Pfade weiter für eine geschützte Echtzeit-Kommunikation insbesondere mit garantierter Latenz genutzt werden, dies jedenfalls so lange, bis einer oder mehrere neue Pfade gefunden und Ressourcen auf diesen erfolgreich reserviert werden konnten.

Insbesondere in Netzwerken, in denen nur von einigen Netzwerkknoten CB (IEEE802.1CB) unterstützt wird, ist es besonders zweckmäßig, die Ressourcen für beide Varianten getrennt zu betrachten. Sollen Pfade anders verlaufen als bestehende Reservierungen, kann es zu Duplikaten in Netzwerkknoten kommen, welche nicht CB unterstützen und entsprechend alle Duplikate dieser Verbindung schicken müssen.

Durch die erfindungsgemäße Verwendung von unterschiedlichen Kennern, insbesondere VIDs, für die "alten" und den oder die "neuen" Pfade können die Daten bei der Weiterleitung unterschieden werden. Bei einer Mehrfachbelegung erfolgt in Netzwerkknoten, etwa Bridges, mit CB nur die Reservierung für das erste ankommende Paket. Bei CB wird in der Regel das erste ankommende Duplikat/Paket weitergeleitet, alle weiteren, später ankommenden Duplikate werden durch den CB-Mechanismus erkannt und gefiltert, d.h. nicht weitergeleitet und stellen somit keine Mehrfachbelegung auf einem gemeinsamen Weiterleiteweg dar. Durch die Reservierung für das erste ankommende Paket werden somit auch nicht mehr Ressourcen als unbedingt notwendig reserviert.

Durch die erfindungsgemäße Vorgehensweise wird eine Umkonfiguration von Verbindungen mit Seamless Redundancy möglich. Eine industrielle Anlage, die ein Netzwerk für die Datenübertragung nutzt, muss beispielsweise nicht mehr gestoppt werden, wenn es eine geplante Optimierung im Netzwerk gibt. Die Verwendung von Seamless Redundancy, insbesondere CB, in Kombination mit der erfindungsgemäßen Reihenfolge der Änderung der Reservierungen im Netzwerk ermöglicht einen unterbrechungsfreien Pfadwechsel.

Eine Änderung des Netzwerkes kann beispielsweise durch eine Erweiterung und/oder Optimierung und/oder einen Umbau und/oder eine Reparatur aufgrund eines Fehlers oder Defekts bedingt bzw. gegeben sein. Bei der Änderung handelt es sich insbesondere um eine permanente Änderung, insbesondere der Netzwerk-Topologie.

Es kann sein, dass von einer Änderung mehrere, insbesondere alle bisherigen Pfade betroffen sind. In einem solchen Fall wird bevorzugt für mehreren, insbesondere alle betroffenen Pfade jeweils ein neuer Pfad berechnet, und versucht, auf jedem neuen Pfad Reservierungen jeweils mit neuen Kennern durchzuführen, wobei sich insbesondere die neuen Kenner aller neuen Pfade voneinander und von den bisherigen Kennern unterscheiden. Dies stellt sicher, dass Daten, die auf sämtlichen bisherigen sowie sämtlichen neuen Pfaden übertragen werden, zuverlässig voneinander unterschieden werden können.

Bevorzugt gehören die Kenner, insbesondere VIDs, die zu den zwei oder mehr redundanten Pfaden einer Übertragung bzw. Verbindung gehören, zu einem gemeinsamen Basis-Kenner, insbesondere einer gemeinsamen Base VLAN bzw. Base VID bzw. sind von dieser umfasst.

Die Kenner, die den wenigstens zwei redundanten Pfaden zugeordnet sind, unterscheiden sich zweckmäßiger Weise voneinander, das heißt, zweckmäßiger Weise kommt nicht der gleiche Kenner für die wenigstens zwei redundanten Pfade zum Einsatz. Dies gilt bevorzugt sowohl für die bisherigen redundanten Pfade als auch für die neuen redundanten Pfade.

Unter einem Pfad ist insbesondere in an sich bekannter Weise ein Übertragungsweg von einem Sender zu einem Empfänger zu verstehen.

Gemäß einer weiteren besonders bevorzugten Ausführungsform ist vorgesehen, dass insbesondere in Reaktion auf die Änderung ein neuer generalisierter, nahezu gerichteter azyklischer Graph (GADAG) für das Netzwerk oder zumindest einen Teil des Netzwerkes berechnet wird, und die Berechnung des wenigstens einen neuen Pfades für den wenigstens einen betroffenen bisherigen Pfad unter Verwendung des neuen GADAG erfolgt. Sofern mehrere, gegebenenfalls alle bisherigen Pfade von einer Änderung betroffen sind und entsprechend für mehrere, gegebenenfalls alle bisherigen Pfade jeweils ein neuer Pfad berechnet werden muss, gilt bevorzugt, dass alle neuen Pfade unter Verwendung des neuen GADAG ermittelt werden.

Die Ermittlung bzw. Berechnung des (neuen) GADAG, also insbesondere das GADAG-Update, wird bevorzugt manuell getriggert. Dies kann zum Beispiel nach der Beendigung einer Reparatur oder geplanten Optimierung von einem Netzwerkadministrator durch ein Netzwerk-Management-System erfolgen. Die manuelle Triggerung bzw. Aktivierung der Neuberechnung, also des des Updates ist besonders zweckmäßig, um gezielt zwischen etwa einer geplanten Erweiterung des Netzwerkes bzw. dem Abschluss einer Reparaturarbeit und dem Ausfall durch einen Fehler unterscheiden zu können.

Überwiegend wird es der Fall sein, dass zur Gewährleistung von Seamless Redundancy auf genau zwei redundanten Pfaden Datenpakete und Duplikate simultan übertragen werden, um den Ausfall eines Defektes auf einem Pfad unterbrechungsfrei auffangen zu können. Dann kann insbesondere vorgesehen sein, dass sich aufgrund einer Änderung im Netzwerk genau zwei bestehende, bisherige Pfade ändern und für diese beiden jeweils ein neuer Pfad berechnen wird, was dann bevorzugt unter Nutzung eines neuen GADAG erfolgt.

Weiterhin kann vorgesehen sein, dass, wenn mehrere, insbesondere alle Pfade von der Änderung betroffen sind, von den ermittelten neuen Pfaden wenigstens ein Pfad in Richtung des neuen GADAG zeigt und wenigstens ein Pfad in entgegengesetzter Richtung. Sollte von einer Änderung nur einer der bisherigen Pfade betroffen sein, gilt bevorzugt, dass von dem einen neuen und dem oder den nicht betroffenen, beibehaltenen bisherigen Pfad wenigstens ein Pfad in Richtung des neuen GADAG zeigt und wenigstens ein Pfad in entgegengesetzter Richtung.

Weiterhin bevorzugt kann vorgesehen sein, dass der berechnete neue GADAG den beteiligten Netzwerkknoten mitgeteilt wird. Dies kann beispielsweise in Form von oder als Bestandteil von Nachrichten erfolgen, die unter Abwicklung eines Protokolls, insbesondere Routing-Protokolls, im Netzwerk verteilt, insbesondere zwischen Netzwerkknoten ausgetauscht werden. Als Beispiel für ein Routing-Protocol sei das ISIS-Protocol genannt, wobei besonders bevorzugt das ISIS-SPB/PRC-Protocol verwendet wird.

Es sei angemerkt, dass nicht ausgeschlossen ist, dass die beteiligten Netzwerkknoten die entsprechenden Informationen, insbesondere einen neuen GADAG nicht untereinander austauschen, sondern jeweils von einer zentralen Stelle erhalten. Der Erhalt von Informationen von zentraler Stelle kann natürlich auch in Kombination mit einem Austausch der Informationen durch die Netzwerkknoten untereinander erfolgen.

Eine weitere Ausführungsform zeichnet sich dadurch aus, dass die wenigstens zwei bisherigen Pfade unter Verwendung eines bisherigen generalisierten, nahezu gerichteten azyklischen Graphen (bisherigen GADAGS) berechnet wurden. Ist dies der Fall, gilt bevorzugt, dass wenigstens einer der bisherigen Pfade in Richtung des bisherigen GADAG und wenigstens ein weiterer der bisherigen Pfade in entgegengesetzter Richtung gezeigt hat oder zeigt. Für den besonders üblichen Fall, dass genau zwei bisherige redundante Pfade vorgesehen sind bzw. waren, zeigt insbesondere einer von den beiden in Richtung des bisherigen GADAG und der andere in entgegengesetzte Richtung.

Es sei angemerkt, dass es Konvention ist, einem Pfad, der in Richtung eines GADAG's zeigt, die Farbe Blau zuzuordnen und einem Pfad, der in Gegenrichtung zeigt, die Farbe Rot.

Für den Fall, dass im Rahmen des erfindungsgemäßen Verfahrens für genau zwei (bisherige) redundante Pfade genau zwei neue redundante Pfade zu ermitteln sind, können den zwei neuen redundanten Pfaden in analoger Weise die Farben Hellblau und Hellrot zugeordnet werden, wobei dann insbesondere gilt, dass der hellblaue Pfad in Richtung des neuen GADAG und der hellrote Pfad in entgegengesetzter Richtung zeigt.

In der Regel gilt, dass eine Neuberechnung zu einem neuen GADAG führt, aus dem dann die beiden neuen Pfade gebildet werden. Entsprechend kann man sagen, dass beide Pfade "aktualisiert" werden. Dabei kann es jedoch sein, dass ein Teil zum gleichen Ergebnis führt (Pfad bleibt gleich - Teil des GADAG bleibt für die neue Topologie unverändert erhalten).

Weiterhin gilt, dass die für Seamless Redundanz notwendigen redundanten Bäume z. B. gemäß IEEE 802.1Qca explizit vorgegeben werden und/oder lokal in den Netzwerkknoten, etwa Bridges, berechnet werden können.

Für die Pfadberechnung kann auch Topology-Discovery und/oder Distributed Path Cpmputing, insbesondere Spanning Tree, Shortest-Path (insbesondere pro Randkonten, wie bei IEEE 802.1 Q SPB-V pro SPT Bridge mit der SPVID) und/oder maximal redundante Bäume (MRT) insbesondere basierend auf einem GADAG genutzt werden.

In weiterer bevorzugter Ausführung kann vorgesehen sein, dass nach dem Abbau der bisherigen Reservierungen auf dem wenigstens einen betroffenen bisherigen Pfad an den beteiligten Netzwerkknoten auf dem wenigstens einen (Jeweils) zugehörigen neuen Pfad weitere Reservierungen von Ressourcen unter Verwendung des bisherigen Kenners des zugehörigen wenigstens einen bisherigen Pfades durchgeführt werden, und anschließend die Reservierungen für den neuen Kenner wieder abgebaut bzw. entfernt werden. So wird es möglich, für den oder die neuen Pfaden auf die bisherigen, Originalkenner, insbesondere VIDs, zurückzuwechseln, was sich als besonders geeignet erwiesen hat.

Besonders bevorzugt erfolgt der Wechsel auf einen oder mehrere neue Pfade für Seamless Redundanz mit der erfindungsgemäßen Aufrechterhaltung der alten Reservierungen und deren Abbau erst im Anschluss an erfolgreiche Reservierungen auf dem oder den neuen Pfaden aus Sicht der beteiligten Endgerät bzw. für eine zugehörige Anwendung völlig transparent. Durch die in der Reservierung für CB definierten Mechanismen zum Ändern des Kenners eines Pfades im Netzwerk für die Reservierung werden bei Verwendung eines speziellen Kenners für Endgeräte die internen im Netzwerk verwendeten Kenner für die Endgeräte nicht sichtbar - somit erfolgt eine Änderung des Kenners im Netzwerk für die Endgeräte transparent.

Bei der Reservierung von Ressourcen entlang des bzw. der (bisherigen sowie neuen) Pfade erfolgt(e) insbesondere eine Konfiguration der beteiligten Netzwerkknoten, wobei bevorzugt ein Kenner, etwa eine VID zum Einsatz kommt/kam, bevorzugt auf dem jeweiligen Netzwerkknoten gespeichert wird/wurde. Die Ressourcen werden für den jeweiligen Stream insbesondere unter dem bzw. für den Kenner reserviert.

Für die Reservierung von Ressourcen an beteiligten Netzwercknoten im Rahmen des erfindungsgemäßen Verfahrens kommt ein Stream-Reservierungsprotokoll zum Einsatz. Als Beispiel für ein solches seien SRP sowie RAP genannt. SRP steht dabei für das Stream Reservation Protocol, bevorzugt gemäß IEEE802.1Q. Das Akronym RAP steht für Ressource Allocation Protocol, wobei es sich insbesondere um das Resource Allocation Protocol gemäß dem Entwurf P802.1Qdd handelt. LRP steht für Link-local Registration Protocol, insbesondere gemäß IEEE P802.1CS.

Das zum Einsatz kommende Reservierungsprotokoll ist bevorzugt derart erweitert, dass es an denjenigen Netzwerkknoten, an welchen dies erforderlich ist, bevorzugt automatisiert eine Konfiguration für Seamless Redundancy vornimmt, insbesondere eine automatische Konfiguration der Duplikatefilter für Seamless Redundancy an den benötigten Stellen im Netzwerk während der Ressourcenreservierung vorgenommen wird. In dem aus dem Stand der Technik vorbekannten Ressourcen-Reservierungsprotokoll sind dazu bereits alle Informationen bekannt.

Für die Reservierung von Ressourcen an den beteiligten Netzwerkknoten auf dem wenigstens einen neuen Pfad kann beispielsweise von dem dem Sender am nächsten gelegenen Netzwerkknoten in Reaktion auf die Änderung eine bevorzugt standardmäßige Ankündigungsnachricht an den in Richtung des Empfängers nächsten bzw. nächstkommenden Netzwerkknoten auf den wenigstens einen neuen Pfad gesendet werden. Bei einer Ankündigungsnachricht kann es sich insbesondere um einen sogenannten Talker-Advertise handeln, wie er aus dem Stand der Technik vorbekannt ist.

Es kann insbesondere vorgesehen sein, dass mehrere neue Pfade ermittelt werden und für die Reservierung von Ressourcen an den beteiligten Netzwerkknoten auf den neuen Pfaden von dem dem Sender am nächsten gelegenen Netzwerkknoten in Reaktion auf die Änderung einer bevorzugt standardmäßige Ankündigungsnachricht an den in Richtung des Empfängers nächsten Netzwerkknoten auf jedem neuen Pfad gesendet wird.

Weiterhin kann für die Reservierung von Ressourcen an den beteiligten Netzwerkknoten auf dem wenigstens einen neuen Pfad von dem dem Empfänger am nächsten gelegenen Netzwerkknoten eine bevorzugt standardmäßige Teilnahme-Nachricht, insbesondere ein Listener-Ready, an den in Richtung des Senders nächsten Netzwerkknoten auf dem wenigstens einen neuen Pfad gesendet werden. Für den Fall, dass mehrere neue Pfade ermittelt werden, kann für die Reservierung von Ressourcen an den beteiligten Netzwerkknoten auf den mehreren neuen Pfaden von dem dem Empfänger am nächsten gelegenen Netzwerkknoten eine bevorzugt standardmäßige Teilnahme-Nachricht, insbesondere ein Listener-Ready, an den in Richtung des Senders nächsten Netzwerkknoten auf jedem der neuen Pfade gesendet werden.

Gemäß diesen Ausführungsformen wird auf die vorbekannten Abläufe für die Stream-Reservierung und Etablierung zurückgegriffen, was sich als besonders geeignet erwiesen hat.

Bei der Weiterleitung der Teilnahme-Nachricht wird bevorzug in Netzwerkknoten, welche auf mehreren Pfaden liegen und CB unterstützen, die CB-Funktionalität für die Pfade mit den jeweils unterschiedlichen Kennern konfiguriert und die Teilnahme-Nachricht wird auf allen Pfaden in Richtung des dem Sender am nächsten liegenden Netzwerkknoten gesendet. Dies ist auch in der ebenfalls auf die Anmelderin zurückgehenden WO 2019/001718 A1 beschrieben.

Die Reservierung von Ressourcen auf dem oder den neuen Pfaden im Rahmen des erfindungsgemäßen Verfahrens wird bevorzugt derart erzielt bzw. abgewickelt, wie es in der WO 2019/001718 Albeschrieben ist, dort insbesondere für einen erstmaligen Erhalt von - zur Redundanzgewährleistung - mehr als einem Pfad mit reservierten Ressourcen an beteiligten Netzwerkknoten.

Aus der WO 2019/001718 A1 geht u.a. hervor, dass durch die geschickte Kombination von vorhandenen Daten des Reservierungsprotokolls und einer Erweiterung von Regeln bei der Durchführung der eigentlichen Stream Reservierung der verbindungsabhängige Konfigurationsanteil von Seamless Redundanz durch das Protokoll erfolgen kann. Die Erweiterung ist dabei insbesondere nur an den Endpunkten des Netzwerkes (Übergänge zum Endgerät) bzw. bei redundanten Übergängen (insbesondere Ring-Ring Koppelstellen) notwendig. Die Umsetzung der Reservierungsanfrage erfolgt dabei jeweils insbesondere am Ein- und Ausgang des TSN Netzwerkes. Im Netzwerk selbst erfolgt die Weiterleitung entsprechend den Standards.

Gemäß der WO 2019/001718 A1 ist insbesondere vorgesehen, dass sowohl eine Stream-Ankündigungs-Nachricht, insbesondere ein Talker Advertise, als auch eine Stream-Teilnahme-Nachricht, insbesondere ein Listener Join, an den Talker- bzw. Listenerseitigen Randknoten vervielfältigt und über die mehreren, insbesondere beiden redundanten Pfade weitergeleitet wird, um die Knoten auf allen redundanten Pfaden entsprechend konfigurieren und die Reservierungen abwickeln zu können.

Die vorteilhafte Erweiterung führt zu einer einfacheren Anwendbarkeit von Seamless Redundanz für geschützte Kommunikation und ermöglicht den Einsatz in konfigurationsarmen Netzwerken.

Die in der WO 2019/001718 A1 beschriebenen Abläufe können analog auch für den Fall einer Änderung eines oder mehrerer der bisherigen redundanten Pfade umgesetzt werden. Insbesondere kann auch die Aktivierung bzw. Einrichtung von Duplikatefiltern zumindest an den benötigten Stellen im Netzwerk auf die in der WO2019/001718 A1 beschriebene Weise, insbesondere unter Verwendung eines entsprechend erweiterten Reservierungsprotokolls erzielt werden.

Die Weiterleitung der Streamdaten erfolgt im Netzwerk in an sich bekannter Weise anhand der für den Stream verwendeten Kennzeichnung in den Stream-Datenpaketen. Je nach konfiguriertem Modus von CB erfolgt eine Weiterleitung der Streamdaten mit jeweils einem eigenen Kenner, insbesondere einer eigenen VID, pro Pfad, oder mit einem gemeinsamen Kenner, insbesondere einer gemeinsamen VID, auf allen Pfaden, die insbesondere zuvor durch die Reservierung, insbesondere einen Talker Advertise und Listener Join konfiguriert wurden. Beide Varianten sind gemäß den im IEEE 802.1 CB Standard definierten Mechanismen möglich.

Das Netzwerk, in dem die Datenübertragung erfolgt, kann zumindest eine Ringtopologie und/oder zumindest eine vermaschte Topologie umfassen.

Das Netzwerk ist weiterhin zweckmäßiger Weise ein AVB- oder TSN-Netzwerk bzw. ein AVB- oder TSN-fähiges Netzwerk. Insbesondere die Netzwerkknoten des Netzwerkes sind AVB- oder TSNfähig, unterstützen einen oder mehrere AVB- oder TSN-Standards, wie die Reservierung von Ressourcen für eine Weiterleitung mit garantierter Latenz.

Es ist selbstverständlich möglich, dass als Stream Daten von einem Sender an mehr als einen Empfänger und/oder Daten von mehreren Sendern an einen Empfänger unter Nutzung reservierter Ressourcen an den beteiligten Netzwerkknoten zu übertragen sind. Dann ist jeweils ein Paar aus einem Sender und einem Empfänger zu betrachten, für welches dann zwei oder mehr (bisherige) redundante Pfade existieren und für jedes Paar von Sender und Empfänger wird, wenn von einer Änderung wenigstens einer der zu dem Paar gehörigen redundanten Pfade betroffen ist, wenigsten ein neuer Pfad ermittelt und versucht, auf diesem Ressourcen zu reservieren.

Weiterer Gegenstand der Erfindung ist ein Netzwerkknoten gemäß Patentanspruch 11.

Bevorzugt ist der erfindungsgemäße Netzwerkknoten derart ausgebildet und/oder eingerichtet, dass er die Reservierung ausführen kann.

Auch kann vorgesehen sein, dass der erfindungsgemäße Netzwerkknoten derart ausgebildet und/oder eingerichtet ist, dass er die Pfade im Netzwerk definiert. Dies hat sich insbesondere als zweckmäßig erwiesen, wenn der Netzwerkknoten in einem Netzwerk als Randknoten fungieren (können) soll, der einem Sender (Talker) bzw. Empfänger (Listener), insbesondere einem einen solche darstellenden Endgerät, am nächsten liegt. Bevorzugt sind die Pfade von einem senderseitigen Randknoten zu definieren bzw. werden von einem senderseitigen Randknoten definiert, wenn ein Stream zwischen genau einem Sender und einem oder mehreren Empfänger einzurichten ist, und von einem empfängerseitigen Rabdknoten, wenn ein Stream zwischen mehreren Sendern und genau einem Empfänger einzurichten ist.

Der erfindungsgemäße Netzwerkknoten hat sich als besonders geeignet für die Durchführung des erfindungsgemäßen Verfahrens erwiesen.

Ein weiterer Gegenstand der Erfindung ist ein Computerprogramm gemäß Patentanspruch 12.

Schließlich ist Gegenstand der Erfindung ein computerlesbares Medium gemäß Patentanspruch 13.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
Figur 1 eine rein schematische Darstellung eines industriellen TSN-Netzwerkes mit mehreren Netzwerkknoten, an dem mehrere Endgeräte teilnehmen;
Figur 2 drei rein schematische Darstellungen des Netzwerkes gemäß Figur 1, wobei nur die Netzwerkknoten und die Verbindungen dieser durch Linien visualisiert sind (links) bzw. ein für das Netzwerk berechneter GADAG durch die Knoten verbindende Pfeile visualisiert ist (Mitte) bzw. ein neuer, aufgrund des Wegfalls einer Verbindung geänderter GADAG durch die Knoten verbindende Pfeile visualisiert ist (rechts);
Figur 3 eine weitere rein schematische Darstellung des Netzwerkes gemäß Figur 1, wobei die Verbindungen durch Linien und zwei redundante Bäume, die zwei der Endgeräte miteinander verbinden und auf dem GADAG gemäß Figur 2 Mitte basieren, durch Pfeile dargestellt sind;
Figur 4 zwei weitere rein schematische Darstellungen des Netzwerkes gemäß Figur 1, wobei nur die beiden in Figur 3 durch die redundanten Bäume verbundenen Endgeräte und erneut die Bäume aus Figur 3 (links) bzw. zwei neue redundante Bäume, die auf dem GADAG gemäß Figur 2 rechts basieren, gezeigt sind;
Figur 5 eine rein schematische Darstellung zu dem Reservierungsablauf; und
Figur 6 drei weitere rein schematische Darstellungen des Netzwerkes gemäß Figur 1 nur mit den beiden Endgeräten gemäß Figur 4, wobei die Datenweiterleitung für den Fall nur eines Kenners mit Pfeilen für drei verschiedene Fälle (links, Mitte, rechts) angedeutet ist.

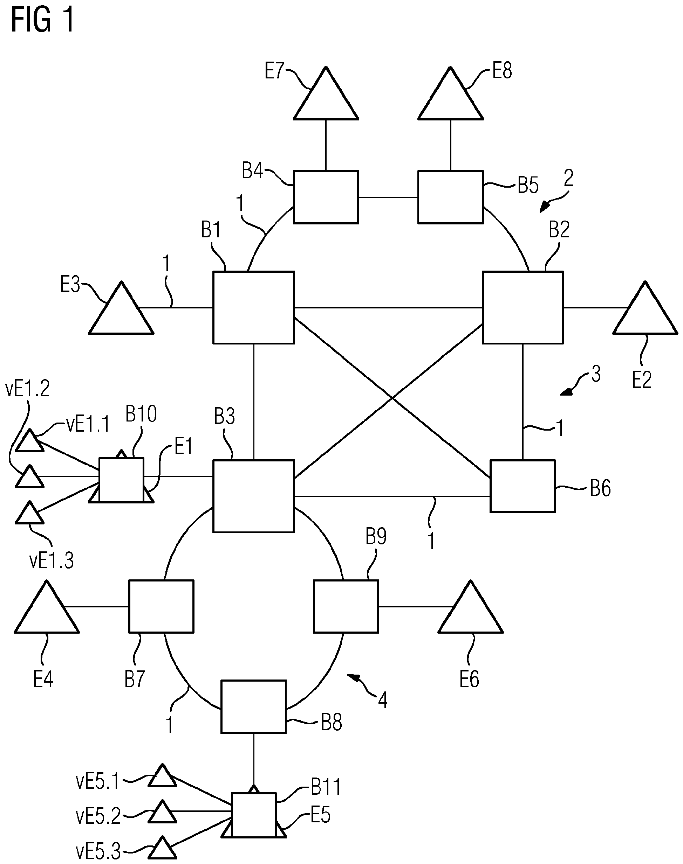

Die Figur 1 zeigt in rein schematischer Darstellung ein industrielles Ethernet-basiertes Netzwerk mit mehreren Netzwerkknoten in Form von Bridges B1-B9. Das Netzwerk ist ein TSN-Netzwerk und sämtliche Netzwerkknoten B1-B9 unterstützen TSN-Standards, insbesondere die Reservierung von Netzwerkressourcen für eine Echtzeit-Datenübertragung mit garantierter Latenz.

Die Netzwerkknoten B1-B9 sind miteinander über Kabel 1 verbunden, die auch als Links bezeichnet werden können. Dabei ergeben sich drei Teilbereiche 2, 3, 4 mit verschiedenen Netzwerktopologien, konkret ein erster oberer Bereich 2 mit einer Girlanden-förmigen Topologie (englisch "Garland") , ein zweiter, mittlerer Bereich 3 mit einer vermaschten Topologie sowie ein dritter unterer Bereich 4 mit einer Ringtopologie.

Die Girlanden-Topologie eignet sich insbesondere für Kostensensitive Feld-Level-Netzwerke bzw. Segmente für Aktoren und Sensoren und sind in der Regel redundant mit vermaschten Netzwerken verbunden, wie in Figur 1 beispielhaft dargestellt.

Vermaschte Netzwerke bzw. Segmente eignen sich insbesondere für zentralisierte Rechenleistung (etwa virtuelle Maschinen in Endgeräten) im Bereich der industriellen Automatisierung, die Semaless "hot plug-in", das heißt den Austausch von Komponenten während des Betriebes des Netzwerkes, für zeitsensitive Streams unterstützen können. Dies kann insbesondere mit hochverfügbaren Netzwerken und der Unterstützung von Topologie-Änderungen durch das Hinzufügen oder Entfernen von Bridges oder Links kombiniert sein.

Ring-Topologien eignen sich ebenfalls insbesondere für Kosten-sensitive Feld-Level-Netzwerke bzw. Segmente für Aktoren und Sensoren, die mit einem vermaschten Netzwerk bzw. Segment verbunden sein können.

An das Netzwerk gemäß Figur 1 sind insgesamt acht Endgeräte E1-E8 angeschlossen, wobei, wie man erkennt, das Endgerät E1 an dem Knoten B3, das Endgerät E2 an dem Knoten B2, das Endgerät E3 an dem Knoten B1, das Endgerät E4 an dem Knoten B7, das Endgerät E5 an dem Knoten B8, das Endgerät E6 an dem Knoten B9, das Endgerät E7 an dem Knoten B4 und das Endgerät E8 an den Knoten B5 liegt.

Auf den Endgeräten E1 und E5, bei denen es sich um Industrie-PCs handelt, laufen Virtualisierungen, wobei auf diesen E1 bzw. E5 jeweils eine interne, virtuelle Bridge B10 bzw. B11 implementiert ist und an jeder der beiden virtuellen Bridges B10, B11 jeweils drei virtualisierte Anwendungen vE1.1, vE1.2, vE1.3 (Endgerät E1) bzw. vE5.1, VE5.2, VE5.3 (Endgerät E5) anliegen.

Die weiteren Endgeräte sind insbesondere speicherprogrammierbare Steuerungen, IO-Geräte, die jeweils Aktoren und/oder Sensoren umfassen bzw. mit solchen verbunden sind, HMI-Panels zur Eingabe durch Benutzer bzw. Betreiber sowie Anzeigevorrichtungen zur Darstellung, wobei dies rein beispielhaft zu verstehen ist.

Konkret stellt das Endgerät E4 beispielsweise vorliegend eine speicherprogrammierbare Steuerung dar, die eine Datenquelle bzw. einen Sender bildet und von der Datenpakete an das Endgerät E8, bei dem es sich vorliegend um ein IO-Gerät handelt, zu übermitteln sind. Das IO-Gerät E8 umfasst Aktoren bzw. ist mit solchen verbunden, über die auf einen in den Figuren nicht dargestellten industriellen Prozess einzuwirken ist. Die Aktoren müssen in an sich bekannter Weise zyklisch Stellwerte erhalten, so dass eine zyklische Übertragung von Datenpaketen mit entsprechendem Nutzdateninhalt von dem Endgerät E4 an das Endgerät E8 zu erfolgen hat.

Um eine gesichert Übertragung der Datenpakte insbesondere mit garantierter Latenz zu gewährleisten, sind an beteiligten Netzwerkknoten B1-B9 für die Übertragung Übertragungsressourcen zu reservieren bzw. reserviert, wie aus dem Stand der Technik, u.a. diversen TSN-Standards, hinlänglich vorbekannt. Die unter Nutzung reservierter Ressourcen periodisch übertragenen Datenpakete können auch als Stream bzw. TSN-Stream bezeichnet werden.

Gemäß AVB und TSN ist es üblich, den Sender bzw. die Datenquelle als Talker und den Empfänger bzw. die Datensenke oder das Datenziel als Listener zu bezeichnen. Entsprechend stellt das Endgerät E4 für den Stream zum Endgerät E8 den Talker und das Endgerät E8 den Listener dar.

Da mit einem Ausfall beispielsweise eines Links 1 oder eines Netzwerkknotens B1-B9 eine Unterbrechung der Kommunikation einhergehen würde, was mit erheblichen Problemen für den industriellen technischen Prozess bzw. eine zugehörige Anlage verbunden wäre, ist es bekannt, eine redundante Datenübertragung vorzusehen.

Im industriellen Bereich, in dem eine besonders hohe Ausfallsicherheit erforderlich ist, hat sich insbesondere die sogenannte Seamless Redundancy als geeignet erwiesen. Gemäß dieser erfolgt eine simultane Übertragung von Datenpaketen auf zwei, insbesondere maximal redundanten Pfaden. Dafür erfolgt eine Duplikation und eine Duplikate-Filterung an erforderlichen Stellen im Netzwerk, insbesondere an einigen der Netzwerkknoten B1-B9. Im Zusammenhang mit Seamless Redundancy sei auch auf die sogenannte "Frame Replication and Elimination for Reliability", insbesondere gemäß IEEE802.1CB, verwiesen.

Um in einem Netzwerk gegebener Topologie zwei insbesondere redundante Pfade bzw. Bäume finden zu können, ist es bekannt, einen sogenannten GADAG zu ermitteln und zwei insbesondere maximal redundante Pfade bzw. Bäume (MRT) auf Basis von diesem zu bestimmen.

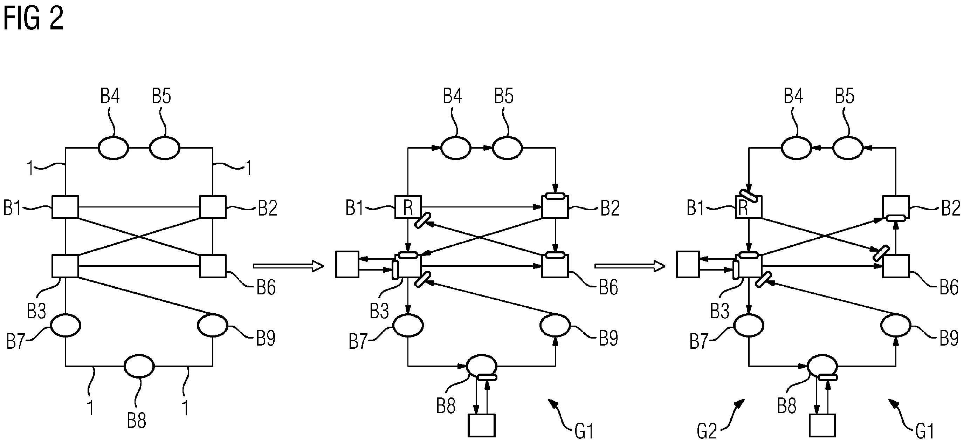

Für das in Figur 1 dargestellte Netzwerk ergibt sich unter der Annahme, dass die Bridge B1 die Wurzel darstellt, ein GADAG G1, wie er in Figur 2 durch entsprechende Pfeile dargestellt ist. Es sei angemerkt, dass in Figur 2 links nochmals nur die Knoten B1-B9 des Netzwerkes gemäß Figur 1 und die zugehörigen Verbindungen 1 durch entsprechende Linien dargestellt sind. Weiterhin sei angemerkt, dass die Balken an einigen Enden der Pfeile in Figur 2 Mitte jeweils das Ende eines sogenannten Ohrs (englisch "Ear" gemäß IEEE 802.1Q) des GADAG G1 darstellen. Der dargestellte GADAG G1 ist das Ergebnis der Berechnung aus IEEE 802.1 Q gemäß dem darin genannten Algorithmus aus dem IETF RFC 7811 - "An Algorithm for Computing IP/LDP Fast Reroute Using Maximally Redundant Trees (MRT-FRR) ".

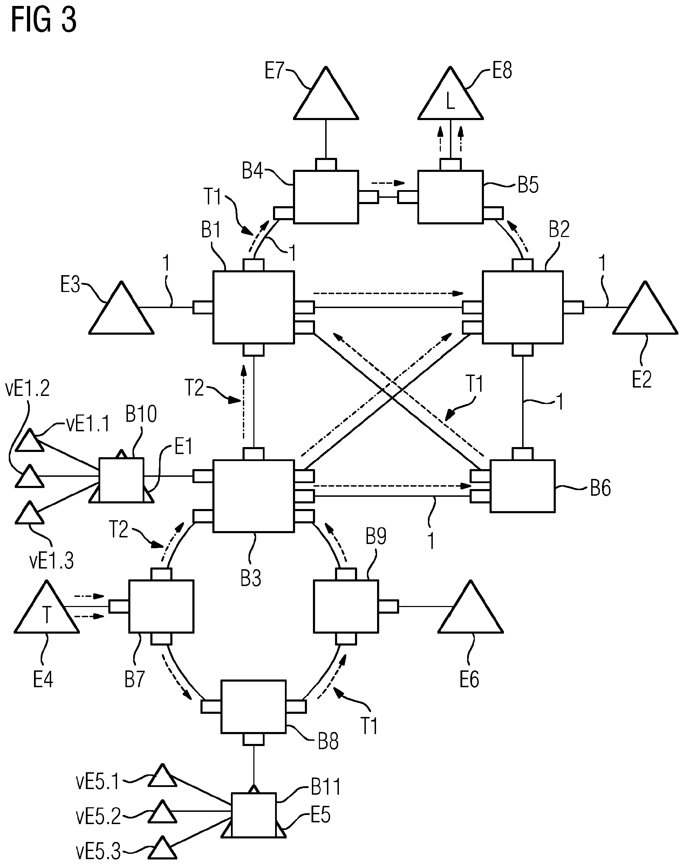

Die Figur 3 zeigt ebenfalls das Netzwerk gemäß Figur 1, wobei das Endgerät E4 durch den Buchstaben "T" als Talker und das Endgerät E8 mit "L" als Listener markiert ist, und die sich aus dem GADAG G1 gemäß Figur 2 Mitte ergebenden zwei maximalen redundanten Pfade P1, P2 bzw. Bäume T1, T2 von dem Talker E4 zu dem Listener E8 zusätzlich zu den Verbindungen 1 durch Pfeile dargestellt sind. Dabei ist ein Baum T1 durch Pfeile mit gestrichelter Linie dargestellt und der zweite Baum T2 durch Pfeile mit strichpunktierter Linie. Wie man erkennt, zeigt der Baum T1 in Richtung des GADAG G1 (vgl. die gestrichelten Pfeile aus Figur 3 mit den Pfeilen aus Figur 2, Mitte) und der Baum T2 in zu dem GADAG G1 entgegengesetzter Richtung (vgl. die Pfeile mit strichpunktierter Linie aus Figur 3 mit den Pfeilen aus Figur 2, Mitte). Es sei angemerkt, dass in Figur 3 auch die Ports der Netzwerkknoten B1 bis B9 schematisch angedeutet sind.

Weiterhin sei angemerkt, dass es insbesondere gemäß IEEE802.1 Q Konvention ist, in Richtung eines GADAG weisende Bäume mit der Farbe blau und in entgegen dieses weisende Bäume mit der Farbe Rot zu kennzeichnen. Vorliegend entsprechen somit die gestrichelten Pfeile von T1 dem gemäß Konvention blauen und die strichpunktierten Pfeile von T2 dem gemäß Konvention roten Baum.

Die Bäume T1, T2 und damit Pfade P1, P2 sind von jedem der Knoten B1-B9 unter Verwendung des GADAG G1 berechnet worden, indem ausgehend von der Bridge B7 als Source für den zu berechnenden Weiterleitepfad der GADAG G1 einmal in seiner Richtung und einmal in entgegengesetzter Richtung für die Pfadberechnung benutzt wurde. Um den Knoten B1 bis B9 zur Verfügung zu stehen, wurde der GADAG G1 nach dessen Bestimmung im Netzwerk verteilt, konkret den Knoten B1 bis B9 mitgeteilt, im Rahmen des hier beschriebenen Ausführungsbeispiels über ISIS-SPB/PCR. Selbstverständlich ist es auch nicht ausgeschlossen, dass eine Baum- bzw. Pfadberechnung nicht lokal durch die Knoten B1-B9 sondern an zentraler Stelle erfolgt. Die GADAG-Berechnung kann auch verteilt durch die Knoten B1 bis B9 lokal anstatt an zentraler Stelle durchgeführt werden.

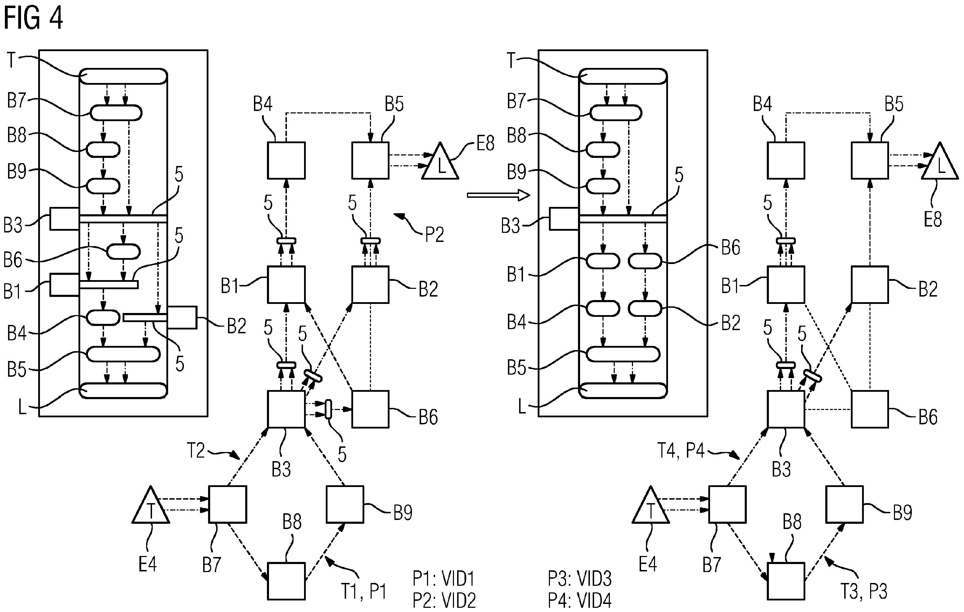

In der Figur 4 links ist das Netzwerk gemäß den Figuren 1, 2 und 3 dargestellt, wobei hier nur die Netzwerkknoten B1 - B9 und zwei der acht Endgeräte E1-E8 dargestellt sind, konkret nur der Talker E4 und der Listener E8. Weiterhin dargestellt sind erneut mit gestrichelten bzw. strichpunktierten Pfeilen die beiden maximal redundanten Bäume T1 und T2, hier ohne zusätzlich dargestellte Verbindungen 1. Neben dem Netzwerk dargestellt ist rein schematisch der Fluss von Datenpaketen gemäß CB (IEEE 802.1CB) vom Talker E4 zum Listener E8. Sowohl in der Darstellung des Netzwerkes als auch in dem schematischen Flussdiagramm ist durch mit der Bezugsziffer 5 versehene Balken dargestellt, an welchen Stellen eine Filterung von Duplikaten gemäß CB stattfindet. Konkret ist dies erkennbar an dem Netzwerkknoten B3, B1 sowie B2 der Fall. Die anderen Netzwerkknoten B4 bis B9 im Netzwerk müssen in der gezeigten Topologie für die gezeigte Verbindung zwischen Talker E4 und Listener E8 CB nicht unterstützen.

Wie man weiterhin sieht, werden Datenpakete simultan sowohl über einen redundanten Weg bzw. Pfad P1, welcher dem Baum T1 entspricht, vom Talker E4 zum Listener E8 weitergeleitet, als auch über einen zweiten Weg bzw. Pfad, welcher einen Teil des Baumes T2 darstellt und sich konkret von dem Talker E4 über die Knoten B7, B3, B2 und B5 zu dem Listener E8 erstreckt.

Durch die simultane Weiterleitung über zwei redundante Pfade P1, P2 (Seamless Redundancy) wird, selbst in demjenigen Falle, dass es zu einem Fehler oder Ausfall eines Netzwerkknotens B1- 9 oder eines Links 1 auf einem der beiden redundante Pfade P1, P2 kommt, sichergestellt, dass die erforderlichen Daten den Listener E8 erreichen.

Es kann pro GADAG-Ohr (z.B. der Bereich bzw. das Segment 4) zu einem Ausfall kommen, ohne dass die Verbindung getrennt bzw. die Datenübertragung unterbrochen wird.

Dabei sind für beide der redundanten Pfade P1, P2 an den beteiligten Netzwerkknoten (für P1 sind dies B7, B8, B9, B3, B6, B1, B4 und B5 und für P2 sind dies B7, B3, B2 und B5) Ressourcen für eine gesicherte Übertragung reserviert worden, dies unter Verwendung eines Reservierungsprotokolls, insbesondere gemäß RAP (Ressource Allocation Protocol). Die Reservierungen von Ressourcen an den Knoten B1-B9 für die beiden Pfade P1, P2 wurde konkret auf die in der ebenfalls auf die Anmelderin zurückgehenden WO2019/001718 A1 beschriebene Weise abgewickelt bzw. erzielt. Es erfolgte insbesondere durch geschickte Kombination von vorhandenen Daten des Reservierungsprotokolls und einer Erweiterung von Regeln bei der Durchführung der eigentlichen Stream Reservierung der verbindungsabhängige Konfigurationsanteil von Seamless Redundanz durch das Reservierungsprotokoll. Für die beiden redundanten Pfade P1, P2 und die Reservierungen an den Knoten B1-B9 auf diesen sind dabei zwei verschiedene Kenner, konkret verschiedene VIDs verwendet worden, für den Pfad P1 eine VID1 und den Pfad P2 eine VID2. Gemäß der in der WO2019/001718 A1 beschriebenen Weise wird für jeden Pfad bei der Reservierung eine getrennte VID verwendet. Im gezeigten Netzwerk wird für die Datenübertragung in den Paketen ebenfalls die in der Reservierung verwendete Kennzeichnung mit unterschiedlichen VIDs für die beiden Übertragungspfade P1 und P2 verwendet. VID1 und VID2 gehören zu einem gemeinsamen Base VLAN bzw. einer gemeinsamen Base VID.

Es kann vorkommen, dass aufgrund einer Änderung, beispielsweise eines Ausfalls oder Wegfalls einer Verbindung oder eines Netzwerkknotens ein Update bzw. eine neue Berechnung des GADAG erforderlich ist bzw. veranlasst wird.

Vorliegend tritt ein solcher Ausfall auf, konkret fällt der Link 1, welcher die beiden Netzwerkknoten B1 und B2 verbindet, aus, was in der Figur jeweils durch "..." angedeutet ist, die von B1 in Richtung B2 und umgekehrt weisen. Der Wegfall dieser Verbindung 1 wird auch durch einen Vergleich von Figur 4 links in Figur 2 links besonders deutlich.

Im Lichte des Wegfalls des Links 1 wird manuell ein Update des GADAG veranlasst. Die manuelle Aktivierung des Updates ist besonders zweckmäßig, um gezielt zwischen etwa einer geplanten Erweiterung des Netzwerkes bzw. dem Abschluss einer Reparaturarbeit und dem Ausfall durch einen Fehler unterscheiden zu können. Die Neuberechnung kann nach Abschluss der Arbeiten am Netzwerk insbesondere durch den Netzwerkadministrator oder den Service-Techniker manuell angestoßen werden, und kann z.B. durch Verwendung eines Netzwerk Management System ausgelöst werden.

Der sich für die Topologie ohne den die beiden Knoten B1 und B2 verbindenden Link 1 ergebende neue GADAG G2 ist in Figur 2 rechts - erneut durch entsprechende Pfeile - visualisiert. Ein Vergleich von dem in Figur 2 Mitte dargestellten alten, bisherigen GADAG G1 mit dem in Figur 2 rechts dargestellten neuen GADAG G2 zeigt, dass sich für einige Verbindungen 1 die Richtung des GADAG geändert hat. Konkret ist dies für die Verbindung 1 zwischen B3 und B2, zwischen B1 und B6 sowie für den Weg von B1 über B4 und B5 zu B2 der Fall. Was die Verbindung 1 zwischen B3 und B1 und die Verbindungen 1 im Ringsegment 4 angeht, sind die Richtungen gleich geblieben.

Es sei angemerkt, dass bezüglich des neuen GADAG G2 gilt, dass eine Stream-Konfiguration resultiert, die zwei Ringe mit B3 als Kopplungselement nutzt. Es kann ein Ausfall pro Ring kompensiert werden. Weiterhin sei angemerkt, dass ein GADAG alle Knoten B1-B9 gleich nutzt und keine Unterscheidung von Segmenten kennt. Das "Feldsegment" mit B4 und B5 dient nun der Redundanz des gesamten vermaschten Netzwerkes und ist insbesondere nicht mehr als abgetrennte Linie zu betrachten.

Von diesen Änderungen der Richtung des GADAG in dem jeweiligen Teilsegment bzw. -bereich 2, 3, 4 des Netzwerkes sind beide Wege bzw. Bäume betroffen. Der Figur 4 rechts können die neuen Bäume T3, T4 und neuen Pfade P3, P4 entnommen werden, die sich aufgrund des neuen GADAG G2 gemäß Figur 2 Mitte ergeben. Dabei ist in Figur 4 rechts der neue in Richtung des neuen GADAG G2 weisende neue Baum T3 wieder durch Pfeile mit gestrichelter Linie und der neue, entgegen des neuen GADAG G2 weisende Baum T4 wieder mit Pfeilen mit strichpunktierter Linie dargestellt. Der neue Pfad P3 in Richtung des neuen GADAG G2 geht von dem Talker E4 über B7, B8, B9, B3, B2 und B5 zum Listener E8 und der neue Pfad P4 entgegen des neuen GADAG G2 von dem Talker E4 über B7, B3, B1, B4 und B5 zum Listener E8.

Auch in Figur 4 rechts ist neben dem Netzwerk rein schematisch der Fluss von Datenpaketen gemäß CB (IEEE 802.1CB) vom Talker E4 zum Listener E8 gemäß den beiden neuen Bäumen T3, T4 bzw. Pfaden P3, P4 dargestellt. Auch hier ist ferner sowohl in der Darstellung des Netzwerkes als auch in dem schematischen Flussdiagramm durch mit der Bezugsziffer 5 versehene Balken dargestellt, an welchen Stellen eine Filterung von Duplikaten gemäß CB stattfindet. Konkret ist dies erkennbar an dem Netzwerkknoten B3 der Fall.

Im Vergleich zwischen Figur 4 links und rechts wird deutlich, dass sich beide Pfade P3, P4 bzw. Bäume T3, T4 im Vergleich zu den bisherigen P1, P2, T1, R2 geändert haben, konkret nur der ringsegmentförmige Bereich 3 und die Verbindung zwischen B3 und B1 gleich geblieben ist.

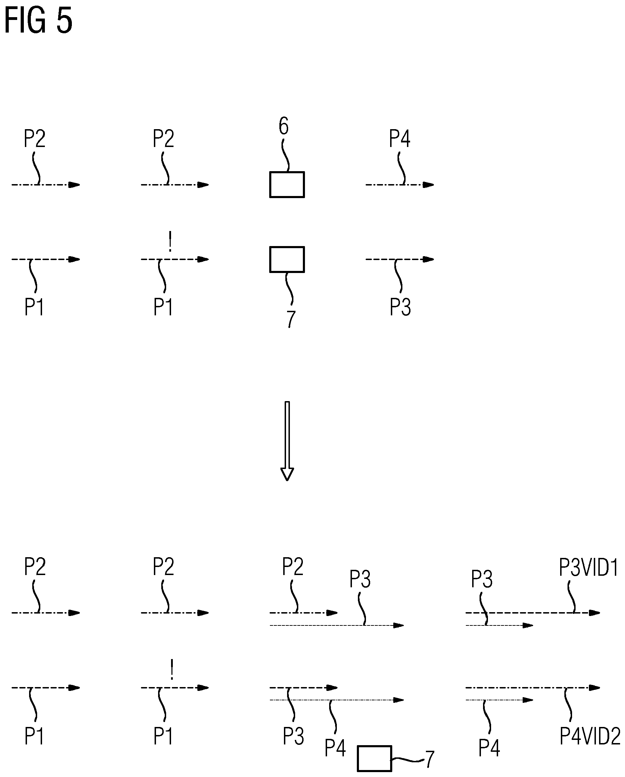

In der Figur 5 oben ist der Ablauf stark vereinfacht durch Pfeile dargestellt. Konkret existieren zu einem Ausgangspunkt (ganz links) zwei Pfade P1, P2, von denen einer in Richtung des GADAG G1 und einer in entgegengesetzter Richtung zeigt. Wenn ein Fehler auf einem Pfad, vorliegend P1 auftritt, was in der Figur 5 durch ein Ausrufezeichen über dem Pfad P1 angedeutet ist, kommt es zu einer Unterbrechung bzw. einem Ausfall der Kommunikation (mit Bezugsziffer 6 versehenes Element) während der Rekonfiguration (mit Bezugsziffer 7 versehenes Element). Erst nach einiger Zeit stehen die neuen Pfade P3, P4 zur Verfügung, die - im Vergleich mit P1 und P2 - beide die Richtung gewechselt haben. Für die neuen, geänderten Pfade kommend die gleichen VIDs zum Einsatz, konkret VID1 für P3 und VID2 für P4.

Durch die erfindungsgemäße Vorgehensweise kann selbst in einem solchen Fall, wenn sich beide redundanten Pfade aufgrund einer Änderung des GADAG G1, G2 ändern, eine Unterbrechung der Kommunikation zuverlässig verhindert werden.

Hierzu ist vorgesehen, dass die bisherigen Reservierungen von Ressourcen an den beteiligten Netzwerkknoten B1-B9 auf den bisherigen redundanten Pfaden T1, T2 bewusst beibehalten werden und parallel versucht wird, auf den neuen Pfaden T3, T4 (siehe Figur 4 rechts) an dem beteiligten Netzwerkknoten B1-B9 Ressourcen für die Datenübertragung vom Talker E4 zum Listener E8 zu reservieren. Dabei werden erfindungsgemäß für die beiden neuen Pfade P3, P4 neue Kenner, konkret VIDs verwendet, die sich von den bisherigen Kennern der bisherigen Pfade P1, P2, also VID1 und VID2 unterscheiden.

Konkret kommt für den neuen Pfad P3 eine VID3 und für den neuen Pfad P4 eine VID4 zum Einsatz.

Es sei angemerkt, dass an beiden neuen Pfaden P3, P4 bzw. den neuen, diesen zugeordneten Kennern VID3, VID4 in Analogie zu den Farben Blau und Rot die Farben Hellblau und Hellrot zugeordnet werden können, wobei gilt, dass der neue hellblaue Pfad P3 in Richtung des neuen GADAG G2 und der neue hellrote Pfad P4 in entgegengesetzter Richtung zeigt.

Die Reservierungen von Ressourcen an beteiligten Netzwerkknoten B1-B9 auf den beiden neuen redundanten Pfaden P3, P4 wird dabei auf die in der ebenfalls auf die Anmelderin zurückgehenden WO2019/001718 A1 beschrieben Weise erzielt. Konkret wird bei einem Update der Pfade von der Bridge B7 ein Advertise für die neuen Pfade im Netzwerk verteilt. Die Bridge B5 dupliziert die erhaltenen Listener Anmeldungen für den neuen GADAG G2 auf die neuen VIDs und verteilt diese im Netzwerk. Dadurch entsteht eine neue Reservierung, welche mit den existierenden Reservierungen für den GADAG G1 auf VID1 und VID2 besteht. Nach erfolgreicher Reservierung kann die Bridge B7 dann die bestehenden für VID1 und VID2 löschen. Um die ursprünglichen VIDs beizubehalten kann die Bridge B7 die Stream-Bekanntgabe (insbesondere Talker Advertise) auf den zuvor verwendeten VIDs (VID1 und VID2) für den GADAG G2 wiederholen.

Nur, sofern die neuen Reservierungen auf den neuen Pfaden P3, P4 erfolgreich sind, werden die bisherigen Reservierungen auf den bisherigen Pfaden T1, T2 abgebaut und insbesondere die Übertragung von Datenpaketen über die beiden bisherigen Pfade T1, T2 eingestellt.

Für die Weiterleitung der Datenpakete gilt insbesondere, dass der Sender-seitige Randknoten, also B7 in ankommenden Datenpaketen die VID3 und die VID 4 hinzufügt, damit die für diese Kennungen reservierten Ressourcen jeweils an den Sendeports in den Bridges entlang des jeweiligen Pfades verwendet werden. Die Bridge B5 verwendet weiterhin für die ankommenden Datenpakte die VID1 und die VID2. Die Endgeräte bzw. eine darauf laufende Anwendung bekommt hiervon nichts mit. Es besteht also Transparenz.

Da die bisherigen Reservierungen gezielt aufrechterhalten werden, dies, bis auf sämtlichen geänderten, neuen Pfaden P3, P4 erfolgreich wieder Ressourcen reserviert werden konnten, steht zu allen Zeiten wenigstens ein Übertragungsweg mit gesicherten Ressourcen zur Verfügung.

Im Anschluss an die erfolgreiche Etablierung der Reservierungen auf den beiden neuen Pfaden P3, P4 und insbesondere den Abbau der Reservierungen auf den bisherigen Pfaden P1, P2 kann ein Wechsel der neuen VIDs, also VID3 und VID4 zurück zu den alten, bisherigen VIDS, also VID1 und VID 2 vorgenommen werden. Dies ist vorliegend der Fall. Konkret wird die VID des neuen Pfades P3, also VID3 auf die alte von Pfad P1, also die VID1 gewechselt und die VID des neuen Pfades P4, also VID4 auf die alte VID von P2, also auf VID2. Im Ergebnis wird der ursprüngliche Konfigurationszustand wiederhergestellt.

In der Figur 5 unten ist der Ablauf mit den zusätzlichen Reservierungen auf den neuen Pfaden P3, P4 - in Analogie zu Figur 5 oben - nochmals stark vereinfacht dargestellt. Darin sind mit P3_{VID1} bzw. P4_{VID2} die beiden neuen Pfade, für welche wieder die bisherigen, alten Kenner verwendet werden, bezeichnet.

Alternativ oder zusätzlich dazu, dass auf die ursprünglichen VIDs zurückgewechselt wird, können auch die neuen VIDs, also VID3 und VID4 bestehen bleiben. IN diesem Fall wird insbesondere der Empfänger-seitige Randknoten, also B5 die VID3 in ankommenden Datenpakten auf VID1 ändern und die VID4 auf VID2, damit völlige Transparenz für die Endgeräte bzw. der Anwendung auf diesen gegeben ist.

Alternativ dazu, dass unterschiedliche Kenner, insbesondere VIDs bei der Datenübertragung verwendet werden, kann auch für alle logischen Pfade der gleiche Kenner, insbesondere die gleiche VID zum Einsatz kommen. Dies gilt insbesondere, wenn an jeder Stelle im Netzwerk, an der sich mehrere Kenner treffen, die in IEE 802.1 CB definierten Mechanismen zur Duplikate-Filterung vorhanden sind bzw. unterstützt werden. Dadurch ist ein Wechsel der logischen Kenner transparent von der eigentlichen Datenübertragung zu sehen. Beim Aufbau der zusätzlichen Reservierung werden nur Ressourcen auf den neu zu verwendenden Links reserviert - im Anschluss werden die Ressourcen auf nicht mehr für die neuen Pfade benötigten Links freigegeben. Durch die logische Trennung mit unterschiedlichen Kennern in der Control-Plane, also für die Reservierung, bleibt die Zugehörigkeit der jeweiligen Reservierung zum Pfad erhalten.

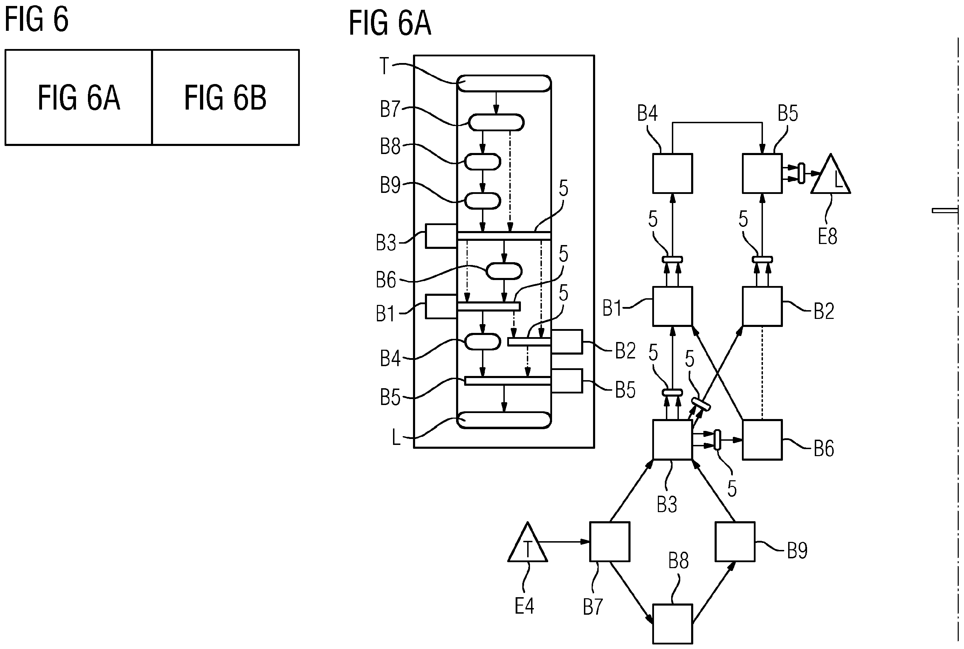

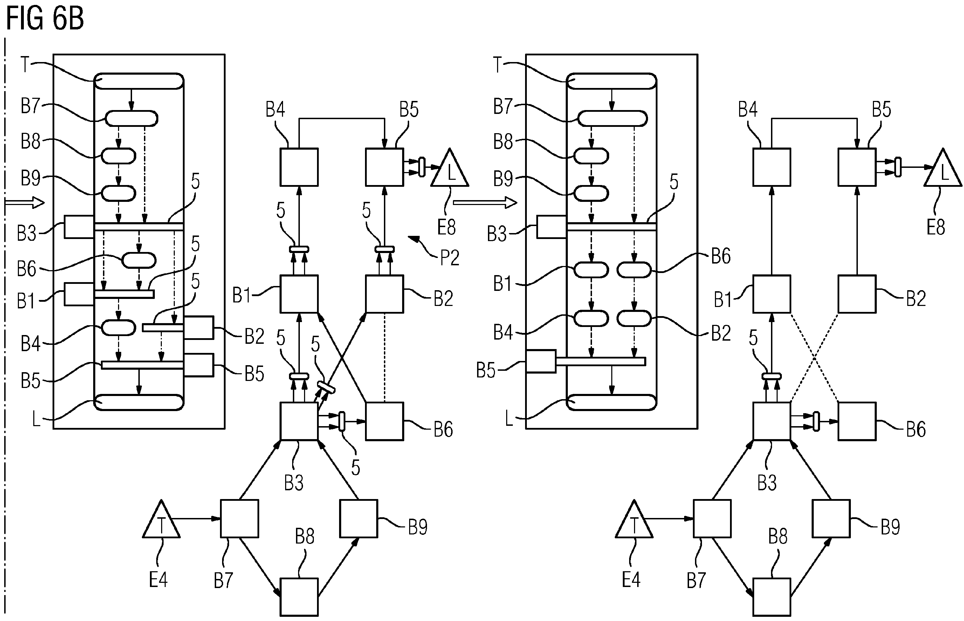

In der Figur 6 ist der Ablauf für den Fall gezeigt, dass für die Datenübertagung (in der Data-Plane) ein Kenner verwendet wird. Die Figur 6 zeigt analog zu Figur 4 das Netzwerk und daneben Flussdiagrammkästen, hier für drei Szenarien. Gleiche Elemente sind mit gleichen Bezugszeichen versehen. In Abweichung zu der Figur 4 ist in den Flussdiagrammkästen aus Figur 6 jedoch der Ablauf in der Control-Plane gezeigt, während die Pfeile in den Netzwerkdarstellungen den Paketfluss (Data-Plane) repräsentieren. Die Figur 6 zeigt drei Fälle. Konkret ist links die Situation ohne Linkausfall dargestellt, in der Mitte ein Linkausfall zwischen den Netzwerkknoten B1 und B2 (analog zu Figur 4, links) und rechts die Situation mit neuem GADAG G2. Da nur ein Kenner, konkret eine VID, für beide Pfade für die Datenweiterleitung verwendet wird, enthält die Figur 6 nur eine Sorte Pfeile, konkret nur solche mit durchgezogener Linie.

Es sei angemerkt, dass die Netzwerkknoten B7 und B5 jeweils Ausführungsbeispiele erfindungsgemäßer Netzwerkknoten darstellen, die zur Durchführung des beschriebenen Ausführungsbeispiels des erfindungsgemäßen Verfahrens ausgebildet und eingerichtet sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur ausfallsicheren Datenübertragung in einem Netzwerk mit mehreren Netzwerkknoten (B1-B9), wobei das Netzwerk ein Time Sensitive Networking, TSN, Netzwerk ist und sämtliche Netzwerkknoten (B1-B9) ausgebildet sind, um TSN-Standards zu unterstützen,
bei dem
- Datenpakete von einem Sender (E4) an einen Empfänger (E8) über wenigstens zwei redundante Pfade (P1, P2), auf denen an beteiligten Netzwerkknoten (B1-B9) Ressourcen für die Übertragung unter Nutzung eines dem jeweiligen Pfad (P1, P2) zugeordneten Kenners (VID1, VID2) reserviert sind, übertragen werden,
- für eine Reservierung von Ressourcen an den beteiligten Netzwerkknoten (B1-B9) ein Stream-Reservierungs-Protokoll verwendet wird, wobei das Stream-ReservierungsProtokoll das Stream Reservation Protocol oder das Resource Allocation Protocol ist,
**dadurch gekennzeichnet, dass** für den Fall, dass aufgrund einer durch einen Umbau und/oder eine Erweiterung des Netzwerkes bedingten Änderung für wenigstens einen betroffenen Pfad (P1, P2) ein neuer Pfad (P3, P4) zu finden ist,
- die bisherigen Reservierungen auf allen redundanten Pfaden (P1, P2) beibehalten werden,
- für den wenigstens einen betroffenen Pfad (P1, P2) ein neuer redundanter Pfad (P3, P4) ermittelt und versucht wird, auf diesem an den beteiligten Netzwerkknoten (B1-B9) Ressourcen für die Übertragung zu reservieren, wobei ein dem neuen Pfad (P3, P4) zugeordneter neuer Kenner (VID3, VID4) verwendet wird, der sich von den bisherigen Kennern (VID1, VID2) unterscheidet, und
- sofern die neuen Reservierungen auf dem wenigstens einen neuen Pfad (P3, P4) erfolgreich sind, die bisherigen Reservierungen auf dem wenigsten einen betroffenen bisherigen Pfad (P1, P2) abgebaut und die Übertragung von Datenpaketen über den wenigstens einen betroffenen bisherigen Pfad (P1, P2) beendet wird.

2. Verfahren nach Anspruch 1,
**dadurch gekennzeichnet, dass**
von der Änderung mehrere Pfade (P1, P2) betroffen sind, und für die mehreren betroffenen Pfade (P1, P2) jeweils ein neuer redundanter Pfad (P3, P4) berechnet wird, und sich die neuen Kenner (VID3, VID4) aller neuen Pfade (P3, P4) voneinander und von den bisherigen Kennern (VID1, VID2) unterscheiden.

3. Verfahren nach Anspruch 1 oder 2,
**dadurch gekennzeichnet, dass**
ein neuer generalisierter, nahezu gerichteter azyklischer Graph, neuer GADAG (G2), für das Netzwerk oder zumindest einen Teil des Netzwerkes berechnet wird, und die Berechnung des wenigstens einen neuen Pfades (P3, P4) für den wenigstens einen betroffenen bisherigen Pfad (P1, P2) unter Verwendung des neuen GADAG (G2) erfolgt.

4. Verfahren nach Anspruch 3,
**dadurch gekennzeichnet, dass**
mehrere Pfade (P1, P2) von der Änderung betroffen sind, und von den für diese ermittelten neuen Pfaden (P3, P4) wenigstens ein Pfad (P3) in Richtung des neuen GADAG (G2) zeigt und wenigstens ein Pfad (P4) in entgegengesetzter Richtung, oder von der Änderung nur einer der bisherigen Pfade betroffen ist, und von dem einen neuen und dem oder den nicht betroffenen bisherigen Pfaden wenigstens ein Pfad in Richtung des neuen GADAG (G2) zeigt und wenigstens ein Pfad in entgegengesetzter Richtung.

5. Verfahren nach einem der Ansprüche 3 oder 4,
**dadurch gekennzeichnet, dass**
der neue GADAG (G2) den beteiligten Netzwerkknoten (B1-B9) in Form von oder als Bestandteil von Nachrichten mitgeteilt wird, die unter Abwicklung eines Routing-Protokolls im Netzwerk verteilt werden.

6. Verfahren nach einem der vorhergehenden Ansprüche, **dadurch gekennzeichnet, dass**
die wenigstens zwei bisherigen Pfade (P1, P2) unter Verwendung eines bisherigen generalisierten, nahezu gerichteten azyklischen Graphen, bisherigen GADAGs (G1), berechnet wurden, und wenigstens einer der bisherigen Pfade (P1, P2) in Richtung des bisherigen GADAG (G1) und wenigstens ein anderer in entgegengesetzter Richtung gezeigt hat oder zeigt.

7. Verfahren nach einem der vorhergehenden Ansprüche,
**dadurch gekennzeichnet, dass**
nach dem Abbau der bisherigen Reservierungen auf dem wenigstens einen betroffenen bisherigen Pfad (P1, P2) an den beteiligten Netzwerkknoten (B1-B9) auf dem wenigstens einen neuen Pfad (P3, P4) weitere Reservierungen von Ressourcen unter Verwendung des bisherigen Kenners (VID1, VID2) des wenigstens einen bisherigen Pfades (P1, P2) durchgeführt werden, und anschließend die Reservierungen für den neuen Kenner (VID3, VID4) wieder abgebaut werden.

8. Verfahren nach einem der vorhergehenden Ansprüche,
**dadurch gekennzeichnet, dass**
für die Reservierung von Ressourcen an den beteiligten Netzwerkknoten (B1-B9) auf dem wenigstens einen neuen Pfad (P3, P4) von dem dem Sender (E4) am nächsten gelegene Netzwerkknoten (B7) in Reaktion auf die Änderung ein Talker-Advertise an den in Richtung des Empfängers (E8) nächsten Netzwerkknoten (B3, B8) auf dem wenigstens einen neuen Pfad (P3, P4) gesendet wird, mehrere neue Pfade (P3, P4) ermittelt werden und für die Reservierung von Ressourcen an den beteiligten Netzwerkknoten (B1-B9) auf den neuen Pfaden (P3, P4) von dem dem Sender (E4) am nächsten gelegene Netzwerkknoten (B7) in Reaktion auf die Änderung ein Talker-Advertise an den in Richtung des Empfängers (E8) nächsten Netzwerkknoten (B3, B8) auf jedem neuen Pfad (P3, P4) gesendet wird.

9. Verfahren nach einem der vorhergehenden Ansprüche,
**dadurch gekennzeichnet, dass**
für die Reservierung von Ressourcen an den beteiligten Netzwerkknoten (B1-B9) auf dem wenigstens einen neuen Pfad (P3, P4) von dem dem Empfänger (E8) am nächsten gelegenen Netzwerkknoten (B5) ein Listener Ready an den in Richtung des Senders (E4) nächsten Netzwerkknoten (B2, B4) auf dem wenigstens einen neuen Pfad (P3, P4) gesendet wird, mehrere neue Pfade (P3, P4) ermittelt werden und für die Reservierung von Ressourcen an den beteiligten Netzwerkknoten (B1, B9) auf den neuen Pfaden (P3, P4) von dem dem Empfänger (E8)am nächsten gelegene Netzwerkknoten (B5) ein Listener-Ready an den in Richtung des Senders (E4) nächsten Netzwerkknoten (B2, B4) auf jedem neuen Pfad (P3, P4) gesendet wird.

10. Verfahren nach einem der vorhergehenden Ansprüche,
**dadurch gekennzeichnet, dass**
das Netzwerk zumindest eine Ringtopologie (4) und/oder zumindest eine vermaschte Topologie (3) umfasst.

11. Netzwerkknoten (B1-B9) für ein Time Sensitive Networking, TSN, Netzwerk, wobei der Netzwerkknoten ausgebildet ist, um TSN-Standards zu unterstützen, und weiterhin zur Durchführung des Verfahrens nach einem der vorhergehenden Ansprüche ausgebildet und/oder eingerichtet ist.

12. Computerprogramm umfassend Programmcode-Mittel zur Durchführung des Verfahrens nach einem der Ansprüche 1 bis 10.

13. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 10 durchzuführen.

## Claims

1. Method for failsafe data transmission in a network having a plurality of network nodes (B1-B9), wherein the network is a time sensitive networking, TSN, network and all network nodes (B1-B9) are designed to support TSN standards, in which
- data packets are transmitted from a transmitter (E4) to a receiver (E8) via at least two redundant paths (P1, P2) on which resources for the transmission are reserved at involved network nodes (B1-B9) using an identifier (VID1, VID2) assigned to the respective path (P1, P2),
- a stream reservation protocol is used to reserve resources at the involved network nodes (B1-B9), wherein the stream reservation protocol is the stream reservation protocol or the resource allocation protocol,
**characterized in that**, if, on account of a change caused by reorganization and/or expansion of the network, a new path (P3, P4) needs to be found for at least one affected path (P1, P2),
- the previous reservations on all redundant paths (P1, P2) are retained,
- a new, redundant path (P3, P4) is determined for the at least one affected path (P1, P2) and an attempt is made to reserve resources for the transmission at the involved network nodes (B1-B9) on this new path, wherein a new identifier (VID3, VID4) which is assigned to the new path (P3, P4) and differs from the previous identifiers (VID1, VID2) is used, and
- if the new reservations on the at least one new path (P3, P4) are successful, the previous reservations on the at least one affected previous path (P1, P2) are removed and the transmission of data packets via the at least one affected previous path (P1, P2) is ended.

2. Method according to Claim 1,
**characterized in that**
a plurality of paths (P1, P2) are affected by the change, and a new, redundant path (P3, P4) is respectively calculated for the plurality of affected paths (P1, P2), and the new identifiers (VID3, VID4) of all new paths (P3, P4) differ from one another and from the previous identifiers (VID1, VID2).

3. Method according to Claim 1 or 2,
**characterized in that**
a new generalized almost directed acyclic graph, a new GADAG (G2), is calculated for the network or at least one part of the network, and the at least one new path (P3, P4) is calculated for the at least one affected previous path (P1, P2) using the new GADAG (G2).

4. Method according to Claim 3,
**characterized in that**
a plurality of paths (P1, P2) are affected by the change, and, of the new paths (P3, P4) determined for these paths, at least one path (P3) points in the direction of the new GADAG (G2) and at least one path (P4) points in the opposite direction, or
only one of the previous paths is affected by the change, and, of the one new path or the unaffected previous path(s), at least one path points in the direction of the new GADAG (G2) and at least one path points in the opposite direction.

5. Method according to either of Claims 3 and 4,
**characterized in that**
the new GADAG (G2) is communicated to the involved network nodes (B1-B9) in the form of or as part of messages which are distributed in the network while processing a routing protocol.

6. Method according to one of the preceding claims,
**characterized in that**
the at least two previous paths (P1, P2) were calculated using a previous generalized almost directed acyclic graph, a previous GADAG (G1), and at least one of the previous paths (P1, P2) pointed or points in the direction of the previous GADAG (G1) and at least one other path pointed or points in the opposite direction.

7. Method according to one of the preceding claims,
**characterized in that**
after the previous reservations on the at least one affected previous path (P1, P2) have been removed, further reservations of resources are carried out at the involved network nodes (B1-B9) on the at least one new path (P3, P4) using the previous identifier (VID1, VID2) of the at least one previous path (P1, P2), and the reservations for the new identifier (VID3, VID4) are then removed again.

8. Method according to one of the preceding claims,
**characterized in that**
in order to reserve resources at the involved network nodes (B1-B9) on the at least one new path (P3, P4) a talker advertise is transmitted from that network node (B7) which is nearest to the transmitter (E4), in response to the change, to the next network node (B3, B8) in the direction of the receiver (E8) on the at least one new path (P3, P4), a plurality of new paths (P3, P4) are determined, and, in order to reserve resources at the involved network nodes (B1-B9) on the new paths (P3, P4), a talker advertise is transmitted from that network node (B7) which is nearest to the transmitter (E4), in response to the change, to the next network node (B3, B8) in the direction of the receiver (E8) on each new path (P3, P4).

9. Method according to one of the preceding claims,
**characterized in that**
in order to reserve resources at the involved network nodes (B1-B9) on the at least one new path (P3, P4), a listener ready is transmitted from that network node (B5) which is nearest to the receiver (E8) to the next network node (B2, B4) in the direction of the transmitter (E4) on the at least one new path (P3, P4), a plurality of new paths (P3, P4) are determined, and, in order to reserve resources at the involved network nodes (B1, B9) on the new paths (P3, P4), a listener ready is transmitted from that network node (B5) which is nearest to the receiver (E8) to the next network node (B2, B4) in the direction of the transmitter (E4) on each new path (P3, P4) .

10. Method according to one of the preceding claims,
**characterized in that**
the network comprises at least one ring topology (4) and/or at least one meshed topology (3).

11. Network node (B1-B9) for a time sensitive networking, TSN, network, wherein the network node is designed to support TSN standards and is also designed and/or configured to carry out the method according to one of the preceding claims.

12. Computer program comprising program code means for carrying out the method according to one of Claims 1 to 10.

13. Computer-readable medium comprising instructions which, when executed on at least one computer, cause the at least one computer to carry out the steps of the method according to one of Claims 1 to 10.

## Revendications

1. Procédé de transmission de données sécurisé à la défaillance dans un réseau ayant plusieurs noeuds (B1-B9) de réseau,
dans lequel le réseau est un réseau Time Sensitive Networking, TNS, et l'ensemble des noeuds (B1-B9) du réseau sont constitués pour venir à l'appui des normes TSN,
dans lequel
- on transmet des paquets de données d'un émetteur (E4) à un récepteur (E8), par l'intermédiaire d'au moins deux chemins (P1, P2) redondants, sur lesquels, à des noeuds (B1-B9) participants du réseau, des ressources pour la transmission sont réservées en utilisant un identifiant (VID1, VID2) associé au chemin (P1, P2) respectif,
- on utilise, pour une réservation de ressources au noeud (B1-B9) participant du réseau, un protocole de réservation stream, le protocole de réservation stream étant le protocole de réservation stream ou le protocole d'allocation de ressources,
**caractérisé en ce que**, dans le cas où, en raison d'une modification due à une reconstruction et/ou à un agrandissement du réseau, il faut trouver un chemin (P3, P4) nouveau pour au moins un chemin (P1, P2) concerné,
- on conserve les réservations prises jusqu'ici sur tous les chemins (P1, P2) redondants,
- pour le au moins un chemin (P1, P2) concerné, on détermine un nouveau chemin (P3, P4) redondant et on essaie de réserver sur celui-ci, au noeud (B1-B9) participant du réseau des ressources pour la transmission, dans lequel on utilise, associé au chemin (P3, P4) nouveau un identifiant (VID3, VID4) nouveau, qui se distingue des identifiants (VID1, VID2) donnés jusqu'ici, et
- dans la mesure où les réservations nouvelles sur au moins un chemin (P3, P4) nouveau sont couronnées de succès, on supprime les réservations prises jusqu'ici sur le au moins un chemin (P1, P2) concerné jusqu'ici et on met fin à la transmission de paquets de données par le au moins un chemin (P1, P2) concerné jusqu'ici.

2. Procédé suivant la revendication 1,
**caractérisé en ce que**
plusieurs chemins (P1, P2) sont concernés par la modification et on calcule, pour les plusieurs chemins (P1, P2) concernés, respectivement un chemin (P3, P4) nouveau redondant, et les identifiants (VID3, VID4) nouveaux de tous les chemins (P3, P4) nouveaux sont différents les uns des autres et des identifiants (VID1, VID2) donnés jusqu'ici.

3. Procédé suivant la revendication 1 ou 2,
**caractérisé en ce que**
l'on calcule un graphe, GADAG (G2) nouveau, généralisé, acyclique à peu près dirigé du réseau ou au moins d'une partie du réseau et le calcul du au moins un chemin (P3, P4) nouveau pour le au moins un chemin (P1, P2) concerné établi jusqu'ici s'effectue en utilisant le GADAG (G2) nouveau.

4. Procédé suivant la revendication 3,
**caractérisé en ce que**
plusieurs chemins (P1, P2) sont concernés par la modification, et parmi les chemins (P3, P4) nouveau déterminés pour ceux-ci, au moins un chemin (P3) pointe dans le sens du GADAG (G2) nouveau et au moins un chemin (P4) dans le sens contraire, ou seul l'un des chemins établis jusqu'ici est concerné par la modification, et parmi le un chemin nouveau et le ou les chemins établis jusqu'ici non concernés, au moins un chemin pointe dans le sens du GADAG (G2) nouveau et au moins un chemin dans le sens contraire.

5. Procédé suivant l'une des revendications 3 ou 4,
**caractérisé en ce qu'**
on fait part, sous forme de messages ou de partie constitutive de messages, du GADAG (G2) nouveau aux noeuds (B1-B9) participant du réseau, de messages, que l'on diffuse par le déroulement d'un protocole de routage dans le réseau.

6. Procédé suivant l'une des revendications précédentes,
**caractérisé en ce qu'**
on a calculé les au moins deux chemins (P1, P2) établis jusqu'ici en utilisant un graphe, GADAG (G1) établi jusqu'ici, généralisé jusqu'ici, à peu près dirigé acyclique, et au moins l'un des chemins (P1, P2) établis jusqu'ici a pointé ou pointe dans le sens du GADAG (G1) établi jusqu'ici et au moins un autre dans le sens contraire.

7. Procédé suivant l'une des revendications précédentes,
**caractérisé en ce qu'**
après la suppression des réservations établies jusqu'ici, on effectue, sur le au moins un trajet (P1, P2) concerné jusqu'ici aux noeuds (B1-B9) du réseau participants sur le au moins un chemin (P3, P4) nouveau d'autres réservations de ressources en utilisant l'identification (VID1, VID2) donnée jusqu'ici du au moins un chemin (P1, P2) jusqu'ici, et ensuite on resupprime les réservations pour le nouvel identifiant (VID3, VID4).

8. Procédé suivant l'une des revendications précédentes,
**caractérisé en ce que**
pour la réservation de ressources aux noeuds (B1-B9) du réseau participant sur le au moins un chemin (P3, P4) nouveau, on envoie du noeud (B7) de réseau le plus proche de l'émetteur (E4), en réaction à la modification, un talker advertise aux noeuds (B3, B8) du réseau, les plus proches dans la direction du récepteur (E8), sur le au moins un chemin (P3, P4) nouveau, on détermine plusieurs chemins (P3, P4) et pour la réservation de ressources aux noeuds (B1-B9) du réseau participants sur le chemin (P3, P4) nouveau, on envoie du noeud (B7) de réseau le plus proche de l'émetteur (E4), en réaction à la modification, un talker advertise aux noeuds (B3-B8) du réseau les plus proches dans la direction du récepteur (E8) sur chaque chemin (P3, P4) nouveau.

9. Procédé suivant l'une des revendications précédentes,
**caractérisé en ce que**
pour la réservation de ressources aux noeuds (B1-B9) du réseau participants sur le au moins un chemin (P3, P4) nouveau, on envoie du noeud (B5) de réseau le plus proche du récepteur (E8), un listener ready aux noeuds (B2, B4) du réseau les plus proches dans la direction de l'émetteur (E4) sur le au moins un chemin (P3, P4) nouveau, on détermine plusieurs chemins (P3, P4) nouveaux et, pour la réservation de ressources aux noeuds (B1-B9) du réseau participants sur les chemins (P3, P4) nouveaux, on envoie sur chaque chemin (P3, P4) nouveau du noeud (B5) du réseau le plus proche du récepteur (E8) un listener ready aux noeuds (B2, B4) du réseau les plus proches dans la direction (E4) de l'émetteur.

10. Procédé suivant l'une des revendications précédentes,
**caractérisé en ce que**
le réseau comprend au moins une topologie (4) annulaire et/ou au moins une topologie (3) maillée.

11. Noeuds (B1-B9) de réseau pour un réseau de Time Sensitive Networking, TSN, dans lequel le noeud de réseau est constitué pour venir à l'appui de normes TSN et est constitué et/ou conçu en outre pour effectuer le procédé suivant l'une des revendications précédentes.

12. Programme d'ordinateur comprenant des moyens de code de programme pour effectuer le procédé suivant l'une des revendications 1 à 10.

13. Support, déchiffrable par ordinateur, qui comprend des instructions qui, lorsqu'elles sont exécutées sur au moins un ordinateur, font que le au moins ordinateur effectue les stades du procédé suivant l'une des revendications 1 à 10.
